# EUROPÄISCHE PATENTSCHRIFT

(11) **EP 1 889 707 B1**
(45) Veröffentlichungstag und Bekanntmachung des Hinweises auf die Patenterteilung: **13.01.2010**
(21) Anmeldenummer: 07015901.7
(22) Anmeldetag: 13.08.2007
(51) Int. Cl.: B29C 49/72, B26F 3/00, B26F 3/06, B29C 37/02, B29C 49/04

(54) **Verfahren und Vorrichtung zum Entfernen von Kunststoffmaterialüberschuss von einem Kunststoffbauteil**
Method and device for removing excess plastic material from a plastic part
Procédé et dispositif destinés à extraire un excédent de matériau plastique d'un composant en plastique

(30) Priorität: 16.08.2006 IT BZ20060037
(43) Veröffentlichungstag der Anmeldung: 20.02.2008
(73) Patentinhaber: Röchling Automotive AG & Co. KG, 68165 Mannheim (DE)
(72) Erfinder: Civetta, Fabrizio, 39040 Montagna (IT); Ciriaci, Emanuele, 39055 Leifers (BZ) (IT)
(74) Vertreter: Trossin, Hans-Jürgen

(56) Entgegenhaltungen:
- EP-A- 0 071 938
- EP-A- 1 050 394
- DE-A1- 2 526 263
- DE-A1- 19 804 265
- US-A- 3 543 619
- US-A- 4 474 716

## Beschreibung

Die vorliegende Erfindung betrifft ein Verfahren sowie eine Vorrichtung zum Entfernen, insbesondere Abtrennen, von Kunststoffmaterialüberschuss von einem Kunststoffbauteil, insbesondere von einem hohlen Kunststoffbauteil aus thermoplastischem Kunststoff gemäß den Oberbegriffen der Ansprüche 1 bzw. 9.

Ein gattungsgemäßes Verfahren und eine gattungsgemäße Vorrichtung sind bekannt aus der EP 1050394 A, DE 19804265 A und DE 2526263 A.

Es ist Aufgabe der vorliegenden Erfindung, eine technische Lehre zum Entfernen von Kunststoffmaterialüberschuss von einem Kunststoffbauteil bereitzustellen, welche die aus dem Stand der Technik bekannten Lehren weiter verbessert.

Diese Aufgabe wird gemäß einem ersten Gesichtspunkt der vorliegenden Erfindung gelöst durch ein Verfahren der eingangs genannten Art, bei welchem das Kunststoffbauteil durch eine Greif- und Bewegungsvorrichtung automatisiert gegriffen und der Basisspur im Wesentlichen folgend relativ zu der Heißgasdüse bewegt wird. Die Greif- und Bewegungsvorrichtung kann beispielsweise ein Mehrachsenroboter sein, bei welchem die erforderliche Bewegung des Kunststoffbauteils relativ zur Heißgasdüse in einfacher aber sehr zuverlässiger Weise in kurzer Zeit durch Teachen programmiert werden kann.

Besonders vorteilhaft ist das erfindungsgemäße Greifen und Bewegen des Kunststoffbauteils durch die Greif- und Bewegungsvorrichtung dadurch, dass das Kunststoffbauteil aus einer zu seiner Herstellung verwendeten Form entnommen werden kann, da es dann in der Regel in definierter Position und mit definierter Orientierung zum Greifen durch die Greif- und Bewegungsvorrichtung bereitgestellt ist.

In diesem Fall ist es vorgesehen, dass eine Heißgasdüse, aus welcher der Heißgasstrahl austritt, im Wesentlichen ortsfest ist, so dass auch die Strahlachse des Heißgasstrahls im Wesentlichen ortsfest ist.

Durch den Heißgasstrahl kann ein verhältnismäßig großer Kunststoffmaterialüberschuss thermisch und strömungsmechanisch vom Kunststoffbauteil abgetrennt werden. Kleinere Kunststoffmaterialüberschüsse, wie etwa geringfügige Grate, können durch bloßes Abschmelzen von dem Kunststoffbauteil entfernt werden.

Die Basisspur kann eine beliebige Trajektorie sein, welche sich an einer Außenfläche des Kunststoffbauteils erstreckt. An jedem Punkt der Basisspur ist dabei eine Schmiegeebene an die Außenfläche des Kunststoffbauteils anlegbar. Die Schmiegeebene ist dabei eine Tangentialebene an die Außenfläche des Kunststoffbauteils, welche einen Punkt der Basisspur enthält. Längs der gesamten Basisspur existiert somit eine Schmiegeebenenschar.

Die Basisspur kann auch aus mehreren voneinander getrennten Basisspurabschnitten gebildet sein, etwa bei in Erstreckungsrichtung unterbrochenem Kunststoffmaterialüberschuss.

Für jeden Punkt der Basisspur gilt, dass sich von ihm ausgehend der unerwünschte Kunststoffmaterialüberschuss von der Außenfläche des Kunststoffbauteils weg erstreckt. Die Richtung, in welcher sich der Kunststoffmaterialüberschuss in einem beliebigen Punkt der Basisspur vom Kunststoffbauteil weg erstreckt, ist in dieser Anmeldung als "Abstehrichtung" bezeichnet. Die Abstehrichtung verläuft in jedem Punkt der Basisspur orthogonal zu dieser. Bei gekrümmter Basisspur verläuft die Abstehrichtung in jedem Punkt der Basisspur orthogonal zu einer in diesem Punkt an die Basisspur angelegten Tangente.

Im Falle eines von der Außenfläche des Kunststoffbauteils weg gekrümmten Kunststoffmaterialüberschusses soll die Abstehrichtung die von der Basisspur ausgehende Erstreckungsrichtung des Kunststoffmaterialüberschusses von der Außenfläche weg sein.

Der Winkel, welchen die Abstehrichtung mit der Schmiegeebene an die Außenfläche des Kunststoffbauteils in jedem Punkt der Basisspur einschließt, ist im Sinne der vorliegenden Anmeldung der kleinste zwischen Abstehrichtung und Schmiegeebene auftretende Winkel.

Die Abstehrichtung kann eine Funktion des Ortes längs der Basisspur sein, d.h. die Abstehrichtung kann sich längs der Basisspur ändern.

Wenn oben von einer jeweils lokal von Basisspur und Abstehrichtung aufgespannten Ebene die Rede ist, so ist damit eine Ebene gemeint, welche an einem beliebigen Punkt der Basisspur zum einen durch die Tangente an die Basisspur in diesem Punkt und zum anderen von der dem Punkt der Basisspur zugeordneten Abstehrichtung aufgespannt ist.

Zur Definition der Strahlachse ist die Strömungsrichtung des Heißgasstrahls maßgebend. Die Strahlachse verläuft stets in Richtung der Heißgasströmung an einer den Heißgasstrahl freigebenden Mündung.

Bei dem hier beschriebenen erfindungsgemäßen Verfahren kann unabhängig von der Geometrie des zu bearbeitenden Kunststoffbauteils stets derselbe Heißgasstrahl verwendet werden, so dass es nicht erforderlich ist, für unterschiedliche Kunststoffbauteile unterschiedliche Werkzeuge bzw. Vorrichtungen anzufertigen.

Weiterhin kann die Relativbewegung zwischen dem Heißgasstrahl und dem Kunststoffbauteil automatisiert bereitgestellt werden, so dass bei der Durchführung des hier vorgeschlagenen Verfahrens keine hohen Lohnkosten entstehen.

Bei der Umrüstung des Verfahrens von einem Kunststoffbauteil auf ein anderes Kunststoffbauteil mit abweichender Geometrie ist es lediglich erforderlich, die Relativbewegung zwischen Heißgasstrahl und Kunststoffbauteil und ggf. die Parameter des Heißgasstrahls, wie etwa Durchmesser, Temperatur und Strömungsgeschwindigkeit, eventuell Strömungsmedium, anzupassen. Dies ist jedoch ein vergleichsweise einfacher Vorgang.

Somit ermöglicht das hier vorgeschlagene Verfahren eine hochflexible und gleichzeitig kostengünstige Möglichkeit, unerwünschte Kunststoffmaterialüberschüsse von einem Kunststoffbauteil zu entfernen.

Sofern ein bloßes Abschmelzen des unerwünschten Kunststoffmaterialüberschusses ausreichend ist, kann zur Vermeidung unnötigen Energieaufwands die thermische Energie des Heißgasstrahls derart eingestellt sein, dass sie ausreicht, das Kunststoffmaterial in einem basisspurnahen Bereich zu erweichen.

Wenn dagegen ein vergleichsweise massereicher unerwünschter Kunststoffmaterialüberschuss vom Kunststoffbauteil zu entfernen ist, ist es vorteilhaft, wenn die kinetische Energie des Heißgasstrahls derart eingestellt ist, dass sie ausreicht, an der Auftreffstelle des Heißgasstrahls auf das Kunststoffmaterial dort erweichtes Kunststoffmaterial mitzureißen und zu entfernen. Somit kann das Kunststoffmaterial durch den Heißgasstrahl zunächst erweicht, also aufgeschmolzen werden, wobei der Heißgasstrahl dann das erweichte Kunststoffmaterial an der Auftreffstelle strömungsmechanisch entfernt.

Selbst Kunststoffmaterialüberschüsse mit geometrische komplexem Verlauf können zuverlässig von dem gewünschten Kunststoffbauteil entfernt werden, wenn die Orientierung der Strahlachse zumindest während eines Abschnitts der Relativbewegung zwischen Heißgasstrahl und Kunststoffbauteil verändert wird.

Für einen besonders effektiven Eintrag von thermischer Energie in das Kunststoffmaterial des unerwünschten Kunststoffmaterialüberschusses sowie für ein möglichst wirksames Entfernen von erweichtem Kunststoffmaterial durch den Heißgasstrahl bei gleichzeitig größtmöglicher Schonung des erwünschten Kunststoffbauteils ist es vorteilhaft, wenn die Strahlachse zumindest in einem Abschnitt der Relativbewegung zwischen Heißgasstrahl und Kunststoffbauteil mit einer jeweils lokal von der Basisspur und der Abstehrichtung aufgespannten Ebene einen Winkel mit einem Betrag von 60° bis 90°, vorzugsweise von 75° bis 90°, besonders bevorzugt im Wesentlichen einen rechten Winkel von etwa 90° einschließt.

Um sicherzugehen, dass der unerwünschte Kunststoffmaterialüberschuss sicher entfernt worden ist, kann das Verfahren einen Prüfschritt umfassen, welcher die Güte des Kunststoffbauteils nach Entfernung des Überschusses prüft. Besonders bevorzugt kann der Prüfschritt derart ausgebildet sein, dass er nach einem Ausformen des Kunststoffbauteils prüfen kann, ob überhaupt ein Kunststoffmaterialüberschuss an diesem vorhanden ist, welcher entfernt werden müsste.

Ein derartiger Prüfschritt kann in einem einfachen aber sehr effektiven Ausführungsbeispiel ein Wiegen des Kunststoffbauteils umfassen.

Gerade bei extrudierten und anschließend blasgeformten Kunststoffbauteilen, für welche das hier vorgeschlagene Verfahren besonders vorteilhaft anzuwenden ist, entstehen beim Blasformen Kunststoffmaterialüberschüsse am Außenrand des Kunststoffbauteils, welche auch als "Blasbutzen" bezeichnet werden. Sie entstehen gewöhnlich beim Schließen der Blasform um einen extrudierten Hohlkörperrohling. Diese Blasbutzen sind in der Regel derart massiv, dass sie selbst mit einfachen Waagen als Übergewicht des gewogenen Erzeugnisses über ein vorbestimmtes Sollgewicht oder einen vorbestimmten Sollgewichtsbereich hinaus feststellbar sind.

Da, wie oben bereits angedeutet, das vorliegende Verfahren besonders vorteilhaft zur Herstellung von hohlen Kunststoffbauteilen geeignet ist und daher die Herstellung hohler Kunststoffbauteile mit für Massenprodukte vergleichsweise hoher Oberflächenqualität vereinfacht, betrifft die vorliegende Erfindung auch ein Verfahren zur Herstellung eines hohlen Kunststoffbauteils, umfassend die folgenden Verfahrensschritte:
- Extrudieren eines, vorzugsweise schlauchförmigen, Hohlkörperrohlings,
- Einbringen des extrudierten Hohlkörperrohlings in eine Blasform,
- Einleiten von Blasluft in den in die Blasform eingebrachten Hohlkörperrohling, um diesen bis zur Anlage an eine Begrenzungswandung der Blasformkavität aufzuweiten,
- Abkühlenlassen des an der Begrenzungswandung anliegenden Kunststoffbauteils und
- Entformen des abgekühlten Kunststoffbauteils aus der Blasform,
wobei ein eventueller Kunststoffmaterialüberschuss, insbesondere Blasbutzen, welcher sich längs einer Basisspur an einer Außenfläche des Kunststoffbauteils erstreckt und in einer Abstehrichtung von der Außenfläche des Kunststoffbauteils absteht, die mit einer die Basisspur enthaltenden Schmiegeebene an die Außenfläche des Kunststoffbauteils einen Winkel einschließt, durch ein Verfahren gemäß voranstehender Beschreibung von dem Kunststoffbauteil entfernt, insbesondere abgetrennt wird.

Gemäß einem weiteren Gesichtspunkt der vorliegenden Erfindung wird die oben stehende Aufgabe auch gelöst durch eine Vorrichtung zum Entfernen, insbesondere Abtrennen von Kunststoffmaterialüberschuss von einem Kunststoffbauteil aus thermoplastischem Kunststoff, insbesondere von einem hohlen Kunststoffbauteil mit allen Merkmalen des Anspruchs 9.

Alle oben im Zusammenhang mit dem erfindungsgemäßen Verfahren genannten Vorteile und Weiterbildungen gelten ohne weiteres auch für die jetzt genannte erfindungsgemäße Vorrichtung bzw. sind in dieser anwendbar und umgekehrt.

Der Abstand der Heißgasdüse von der Basisspur, in welchem die Heißgasdüse relativ zum Kunststoffbauteil beweglich ist, kann über den Relativbewegungsweg der Heißgasdüse veränderlich sein.

Für einen besonders effektiven Eintrag von thermischer Energie aus dem Heißgasstrahl in das Kunststoffmaterial des Kunststoffmaterialüberschusses oder auch des Kunststoffbauteils kann vorgesehen sein, dass die Strahlachse zumindest in einem Abschnitt der Relativbewegung zwischen Heißgasstrahl und Kunststoffbauteil mit einer jeweils lokal von der Basisspur und der Abstehrichtung aufgespannten Ebene einen Winkel mit einem Betrag von 60° bis 90°, vorzugsweise von 75° bis 90°, besonders bevorzugt im Wesentlichen einen rechten Winkel von etwa 90° einschließt.

Alle in der vorliegenden Anmeldung angegebenen Winkelbeträge beziehen sich auf ein Winkelmesssystem, bei welchem ein Vollkreis in 360° eingeteilt ist.

Zur Sicherstellung der Relativbewegung umfasst die Vorrichtung erfindungsgemäß eine Bewegungsvorrichtung, etwa einen Mehrachsenroboter, welche das Kunststoffbauteil greift, hält und relativ zu der ortsfesten Heißgasdüse mit im Wesentlichen ortsfester Strahlachse bewegt.

Eine besonders hohe Positioniergenauigkeit des Kunststoffbauteils durch die Greif- und Bewegungsvorrichtung ist erfindungsgemäß dadurch sichergestellt, dass die Greif- und Bewegungsvorrichtung dazu ausgebildet ist, das Kunststoffbauteil aus einer zu seiner Herstellung verwendeten Form zu entnehmen und relativ zu der Heißgasdüse zu bewegen. Die Herstellungsform kann aufgrund der besonderen Eignung des hier vorgeschlagenen erfindungsgemäßen Verfahrens und der erfindungsgemäßen Vorrichtung eine Blasform sein.

Weiterhin kann der Fall auftreten, dass der Kunststoffmaterialüberschuss längs der Basisspur eine schwankende Materialdicke aufweist. Auf diese Situation kann der Heißgasstrahl durch eine Heißgasstrahl-Steuer/Regeleinrichtung angepasst werden, durch welche die Temperatur oder/und die Strömungsgeschwindigkeit während der Relativbewegung zwischen Heißgasdüse und Kunststoffbauteil veränderlich ist. Entsprechendes gilt für das erfindungsgemäße Verfahren.

Zur Sicherstellung der gewünschten Produktqualität kann die Vorrichtung eine Prüfeinrichtung, vorzugsweise die oben genannte Waage, umfassen, welche die Güte des Kunststoffbauteils nach Entfernung eines eventuell vorhandenen Kunststoffmaterialüberschusses prüft, wobei die Prüfeinrichtung vorzugsweise dazu ausgebildet ist, vor einer Entfernung eines eventuell vorhandenen Kunststoffmaterialüberschusses zu prüfen, ob an einem Kunststoffbauteil Kunststoffmaterialüberschuss vorhanden ist oder nicht.

Hierzu kann die Prüfeinrichtung eine Vergleichseinrichtung umfassen, welche einen von der Prüfeinrichtung erfassten Ist-Parameter, insbesondere Ist-Gewicht, mit einem vorbestimmten Soll-Parameter, insbesondere Soll-Gewicht, oder einem vorbestimmten Soll-Parameterbereich vergleicht.

Die vorstehend beschriebene Erfindung wird nachfolgend anhand der beiliegenden Figuren, welche ein Ausführungsbeispiel der vorliegenden Erfindung zeigen, näher erläutert. Es stellt dar:
- Fig. 1: eine schematische Darstellung der Herstellung eines extrudierten und blasgeformten Hohlkörpers aus Kunststoffmaterial,
- Fig. 2: eine Vorderansicht einer extrudierten und blasgeformten Kunststoffflasche mit unerwünschtem Kunststoffmaterialüberschuss,
- Fig. 3: eine Seitenansicht der Flasche mit Kunststoffmaterialüberschuss von Fig. 2,
- Fig. 4: eine perspektivische Ansicht, teilweise im Schnitt, des Bodens der Flasche von Figuren 2 und 3 mit unerwünschtem Kunststoffmaterialüberschuss,
- Fig. 5: einen vergrößerten Teil der Basisspur des flaschenbodenseitigen Kunststoffmaterialüberschusses der Figuren 2 bis 4, und
- Fig. 6: eine erfindungsgemäße Vorrichtung.

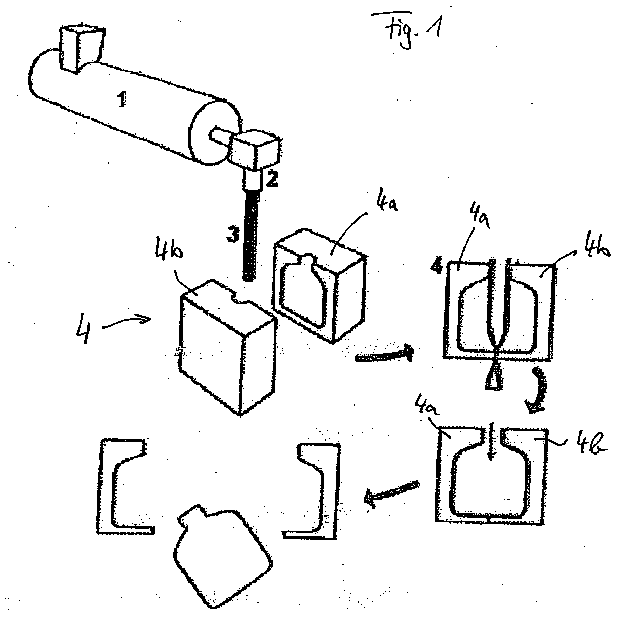

In Fig. 1 ist ein Extruder 1 mit einen Extruderkopf 2 dargestellt, durch welchen ein schlauchförmiger Hohlkörperrohling 3 extrudiert wird.

Der Hohlkörperrohling 3 wird in eine aus den zwei Formhälften 4a und 4b gebildete Blasform 4 eingebracht und durch Einleiten von Blasluft in den Innenbereich des Hohlkörperrohlings 3 aufgeweitet, bis das Kunststoffmaterial des Hohlkörperrohlings an den Wandungen der Blasformkavität der Blasform 4 anliegt.

Nach dem Abkühlen des so aufgeweiteten Kunststoffbauteils werden die Formhälften 4a und 4b getrennt und das fertig geformte Kunststoffbauteil, ggf. mit unerwünschtem Kunststoffmaterialüberschuss entformt.

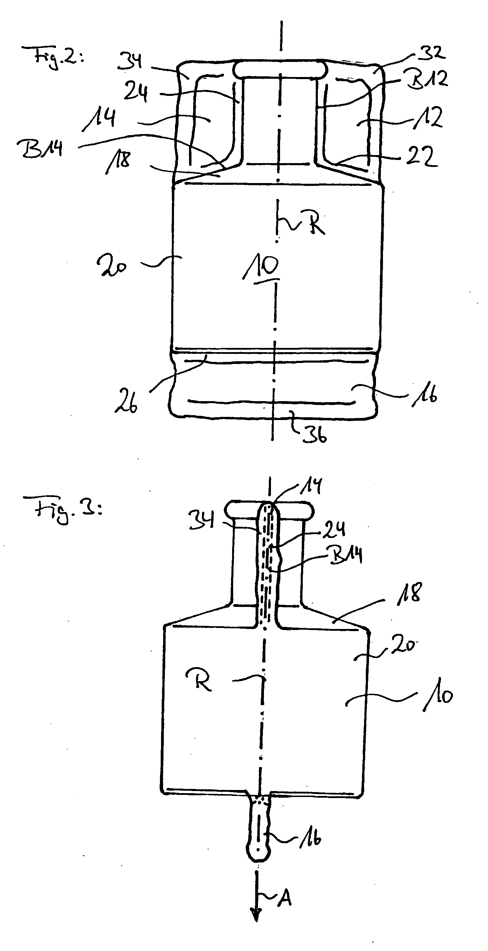

In Fig. 2 ist eine Vorderansicht einer gemäß dem in Fig. 1 schematisch dargestellten Herstellungsverfahren erzeugten Kunststoffflasche 10 als ein Beispiel für ein Kunststoffbauteil schematisch dargestellt.

Die Kunststoffflasche 10 weist drei Kunststoffmaterialüberschüsse 12, 14 und 16 auf. Die Überschüsse 12 und 14 erstrecken sich dabei an jeweils gegenüberliegenden Seiten vom Flaschenhals und der konischen, flaschenhalsnäheren Stirnfläche 18 des Flaschenkörpers 20 weg. Der Überschuss 16 erstreckt sich von der Flaschenunterseite aus von der Flasche 10 weg.

Wie aus den Figuren 2 und 3 hervorgeht, liegen die Kunststoffmaterialüberschüsse 12, 14 und 16 in dem dargestellten Beispiel in einer die Rotationssymmetrieachse R der Flasche 10 enthaltenden Ebene.

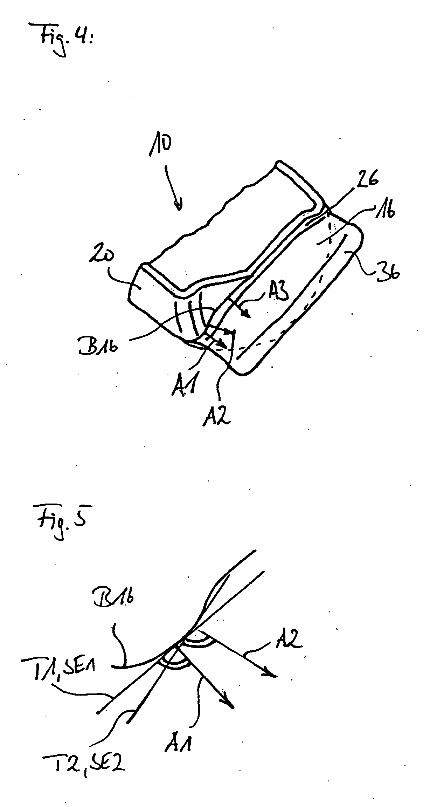

In Fig. 2 sind die Basisspuren B12 und B14 gut zu erkennen, längs welcher die Überschüsse 12 und 14 mit der Kunststoffflasche 10 verbunden sind. Die Basisspuren B12 und B14, wie auch die in Fig. 2 nicht zu erkennende Basisspur B16 (s. Fig. 4) des Überschusses 16 liegen in Fig. 2 parallel zur Zeichenebene der Fig. 2.

Die Überschüsse 12, 14 und 16 entstehen beim Schließen der Blasform um den extrudierten Hohlkörperrohling herum. Dabei werden die die späteren Überschüsse 12, 14 und 16 bildenden Kunststoffabschnitte in eigens dafür vorgesehenen Quetschkavitäten in der Trennebene oder allgemein Trennfläche der Blasformen gequetscht. Zur Erleichterung des Entfernens der Kunststoffmaterialüberschüsse 12, 14 und 16 weisen diese jeweils eine kunststoffflaschennahe Dünnstelle 22, 24 und 26 als Sollbruchstelle auf.

Zum Abtrennen der Kunststoffmaterialüberschüsse 12, 14 und 16 wird ein Heißgasstrahl den jeweiligen Basisspuren B12, B14 und B16 folgend derart relativ zur Kunststoffflasche 10 geführt, dass seine Strahlachse auf die kunststoffbauteilnahe Sollbruchstelle 22, 24 und 26 auftrifft, da hier aufgrund der geringeren Wandstärke des Kunststoffmaterialüberschusses der geringste Energieeintrag in das Kunststoffmaterial zum Abtrennen des Überschusses nötig ist.

Die Strahlachse des Heißgasstrahls trifft möglichst senkrecht auf die Erstreckungsebene des Kunststoffmaterialüberschusses in der Nähe der jeweiligen Basisspur auf.

In dem in den Figuren 2 und 3 gezeigten Ausführungsbeispiel liegt die Abstehrichtung A, welche in Fig. 3 für den Kunststoffmaterialüberschuss 16 angedeutet ist, in der Erstreckungsebene der ebenen Überschüsse 12, 14 und 16 und ist an jedem Ort einer Basisspur orthogonal zu dieser. Die Schar aller Abstehrichtungen entlang einer Basisspur definiert somit die Fläche, längs welcher ein Kunststoffmaterialüberschuss von der Basisspur, also von der Oberfläche des Kunststoffbauteils ausgehend, sich von dem Kunststoffbauteil weg erstreckt.

Nachzutragen bleibt, dass die Überschüsse 12, 14 und 16 in dem in den Figuren 2 bis 4 gezeigten Beispiel an ihren von der Kunststoffflasche 10 entfernt gelegenen Rändern Wülste 32, 34 und 36 mit Kunststoffmaterialverdickungen aufweisen. Dies muss jedoch nicht so sein.

In Fig. 4 ist perspektivisch der Bodenbereich der Kunststoffflasche 10 der Figuren 2 und 3 mit dem davon ausgehenden Kunststoffmaterialüberschuss 16 dargestellt.

Deutlich zu erkennen sind die zwar in ein und derselben Ebene liegenden, jedoch in unterschiedliche Richtungen weisenden Abstehrichtungen A1, A2 und A3 an unterschiedlichen Orten der Basisspur B16 des Überschusses 16.

In Fig. 5 ist ein gekrümmter Abschnitt der Basisspur B16 vergrößert dargestellt, zusammen mit den davon an unterschiedlichen Orten ausgehenden Abstehrichtungen A1 und A2, welche jeweils orthogonal zu einer Tangente an die Basisspur B16 in dem Punkt orientiert sind, von welchem die Abstehrichtungen ausgehen. Eine Schmiegeebene an die Kunststoffflasche in einem Punkt der Basisspur B16 enthält stets die Tangente an die Basisspur in diesem Punkt. In dem in Fig. 5 gezeigten Beispiel sind die Schmiegeebenen SE1 und SE2 an die in der Zeichenebene von Fig. 5 liegende Basisspur orthogonal zu der Zeichenebene und fallen damit in der Projektion mit den jeweiligen Tangenten T1 und T2 an die Basisspur B16 zusammen.

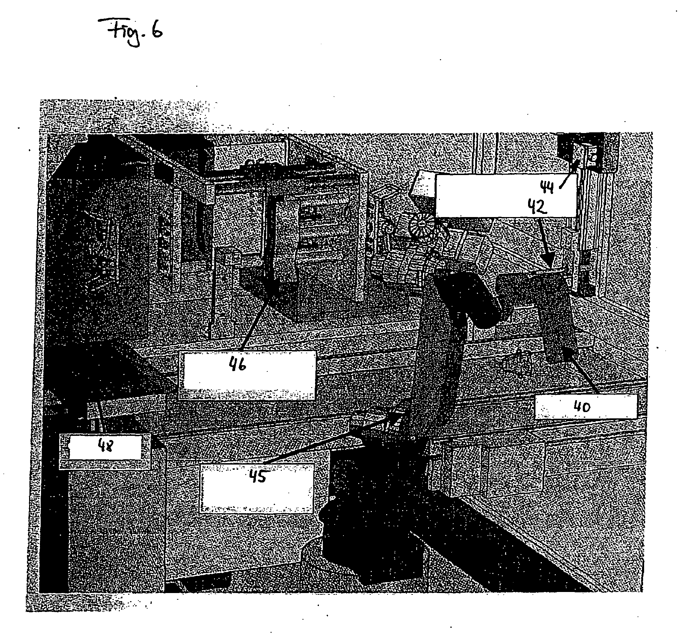

In Fig. 6 ist schematisch eine Vorrichtung zum Entfernen unerwünschter Kunststoffmaterialüberschüsse von Kunststoffbauteilen dargestellt. Ein blasgeformtes Bauteil ist in Fig. 6 mit dem Bezugszeichen 40 gekennzeichnet. Eine Heißgasdüse 42, genauer eine Heißluftdüse, ist ortsfest unbeweglich in einem Gestell 44 vorgesehen.

Ein Mehrachsenroboter 45 greift das Bauteil 40 aus der Teileentnahmestation 46 mit nicht näher dargestellten Greifvorrichtungen und führt das Bauteil mit einem vorbestimmten, ggf. während der Relativbewegung veränderlichen, Abstand, zu den Basisspuren der jeweils zu entfernenden Kunststoffmaterialüberschüsse an der Mündung der Heißgasdüse 42 vorbei, so dass ein aus der Heißgasdüse 42 austretender Heißgasstrahl mit möglichst großem Winkel auf die jeweils lokal von Basisspur und Abstehrichtung des Kunststofimaterialüberschusses aufgespannte Ebene trifft.

Durch den auftreffenden Heißgasstrahl wird das Kunststoffmaterial des Überschusses nahe der Basisspur angeschmolzen und ggf. von der Heißgasströmung mitgerissen, so dass der Kunststoffmaterialüberschuss von dem Bauteil 40 getrennt wird. Außerdem ist es möglich, Grate mit lediglich geringfügiger Erhebung bezüglich der Kunststoffbauteiloberfläche mit dem Heißgasstrahl abzuschmelzen und dadurch zu entfernen.

Die in Fig. 6 dargestellte Vorrichtung umfasst ferner eine Waage 48, auf welcher die Bauteile 40 nach der Entnahme aus der Teileentnahmestation 46 oder/und nach dem Entfernen von Überschüssen gewogen werden können, um ihr tatsächliches Gewicht mit einem gewünschten Sollgewicht oder Sollgewichtsbereich zu vergleichen, um dadurch Rückschlüsse auf möglicherweise vorhandene Kunststoffmaterialüberschüsse ziehen zu können.

## Patentansprüche

1. Verfahren zum Entfernen, insbesondere Abtrennen, von Kunststoffmaterialüberschuss (12, 14, 16) von einem Kunststoffbauteil (10; 40), insbesondere von einem hohlen Kunststoffbauteil (10; 40), aus thermoplastischem Kunststoff, wobei der Kunststoffmaterialüberschuss (12, 14, 16) sich längs einer Basisspur (B12, B14, B16) an einer Außenfläche des Kunststoffbauteils (10) erstreckt und in einer Abstehrichtung (A, A1, A2) von der Außenfläche des Kunststoffbauteils (10; 40) absteht, welche mit einer die Basisspur (B12, B14, B16) enthaltenden Schmiegeebene (SE1, SE2) an die Außenfläche des Kunststoffbauteils (10) einen Winkel einschließt, wobei ein längs einer Strahlachse strömender Heißgasstrahl, dessen Strahlachse mit einer jeweils lokal von Basisspur (B12, B14, B16) und Abstehrichtung aufgespannten Ebene einen Winkel einschließt, derart relativ zum Kunststoffbauteil (10) der Basisspur (B12, B14, B16) im Wesentlichen folgend bewegt wird, dass der Kunststoffmaterialüberschuss (12, 14, 16) von dem Kunststoffbauteil (10; 40) entfernt wird,
**dadurch gekennzeichnet, dass** das Kunststoffbauteil (10; 40) durch eine Greif- und Bewegungsvorrichtung, etwa einen Mehrachsenroboter (45), gegriffen und relativ zu einer ortsfesten Heißgasdüse (42), aus welcher der Heißgasstrahl mit im Wesentlichen ortsfester Strahlachse austritt, bewegt wird, wobei das Kunststoffbauteil (10; 40) zur Entnahme durch die Greif- und Bewegungsvorrichtung aus einer Form (4), insbesondere Blasform, bereitgestellt wird.

2. Verfahren nach Anspruch 1,
**dadurch gekennzeichnet, dass** die thermische Energie des Heißgasstrahls derart eingestellt ist, dass sie ausreicht, das Kunststoffmaterial in einem basisspumahen Bereich (bei 22, 24, 26) zu erweichen.

3. Verfahren nach Anspruch 2,
**dadurch gekennzeichnet, dass** die kinetische Energie des Heißgasstrahls derart eingestellt ist, dass sie ausreicht, an der Auftreffstelle des Heißgasstrahls auf das Kunststoffmaterial dort erweichtes Kunststoffmaterial mitzureißen und zu entfernen.

4. Verfahren nach einem der vorhergehenden Ansprüche,
**dadurch gekennzeichnet, dass** die Orientierung der Strahlachse zumindest während eines Abschnitts der Relativbewegung zwischen Heißgasstrahl und Kunststoffbauteil (10; 40) verändert wird.

5. Verfahren nach einem der vorhergehenden Ansprüche,
**dadurch gekennzeichnet, dass** die Strahlachse zumindest in einem Abschnitt der Relativbewegung zwischen Heißgasstrahl und Kunststoffbauteil (10; 40) mit einer jeweils lokal von der Basisspur und der Abstehrichtung aufgespannten Ebene einen Winkel mit einem Betrag von 60° bis 90°, vorzugsweise von 75° bis 90°, besonders bevorzugt im Wesentlichen einen rechten Winkel von etwa 90° einschließt.

6. Verfahren nach einem der vorhergehenden Ansprüche,
**dadurch gekennzeichnet, dass** in einem Prüfschritt die Güte des Kunststoffbauteils (10) nach Entfernung eines eventuell vorhandenen Kunststoffmaterialüberschusses (12, 14, 16) geprüft wird.

7. Verfahren nach Anspruch 6,
**dadurch gekennzeichnet, dass** der Prüfschritt ein Wiegen des Kunststoffbauteils (10; 40) umfasst.

8. Verfahren zur Herstellung eines hohlen Kunststoffbauteils, umfassend die folgenden Verfahrensschritte:
- Extrudieren eines, vorzugsweise schlauchförmigen, Hohlkörperrohlings (3),
- Einbringen des extrudierten Hohlkörperrohlings (3) in eine Blasform (4),
- Einleiten von Blasluft in den in die Blasform (4) eingebrachten Hohlkörperrohling (3), um diesen bis zur Anlage an eine Begrenzungswandung der Blasformkavität aufzuweiten,
- Abkühlenlassen des an der Begrenzungswandung anliegenden Kunststoffbauteils (10; 40) und
- Entformen des abgekühlten Kunststoffbauteils (10; 40) aus der Blasform (4),
**dadurch gekennzeichnet, dass** ein eventueller Kunststoffmaterialüberschuss (12, 14, 16), insbesondere Blasbutzen, welcher sich längs einer Basisspur (B12, B14, B16) an einer Außenfläche des Kunststoffbauteils (10) erstreckt und in einer Abstehrichtung (A, A1, A2) von der Außenfläche des Kunststoffbauteils (10; 40) absteht, welche mit einer die Basisspur (B12, B14, B16) enthaltenden Schmiegeebene (SE1, SE2) an die Außenfläche des Kunststoffbauteils (10) einen Winkel einschließt, durch ein Verfahren nach einem der vorhergehenden Ansprüche von dem Kunststoffbauteil (10; 40) entfernt, insbesondere abgetrennt wird.

9. Vorrichtung zum Entfernen, insbesondere Abtrennen von Kunststoffmaterialüberschuss (12, 14, 16) von einem Kunststoffbauteil (10; 40) aus thermoplastischem Kunststoff, insbesondere von einem hohlen Kunststoffbauteil (10; 40), wobei der Kunststoffmaterialüberschuss (12, 14, 16) sich längs einer Basisspur (B12, B14, B16) an einer Außenfläche des Kunststoffbauteils (10; 40) erstreckt und in einer Abstehrichtung (A, A1, A2) von der Außenfläche des Kunststoffbauteils (10; 40) absteht, welche mit einer die Basisspur (B12, B14, B16) enthaltenden Schmiegeebene (SE1, SE2) an die Außenfläche des Kunststoffbauteils (10; 40) einen Winkel einschließt,
wobei die Vorrichtung eine Heißgasdüse (42) umfasst, welche relativ zum Kunststoffbauteil (10; 40) mit Abstand von der Basisspur (B12, B14, B16), dieser im Wesentlichen folgend, derart beweglich ist, dass eine Strahlachse, längs welcher Heißgas aus der Heißgasdüse (42) ausströmt, mit einer jeweils lokal von Basisspur (B12, B14, B16) und Abstehrichtung (A, A1, A2) aufgespannten Ebene einen Winkel einschließt, wobei der Kunststoffmaterialüberschuss (12, 14, 16) unter Verwendung des Heißgasstrahls von dem Kunststoffbauteil (10; 40) entfernt wird,
**dadurch gekennzeichnet, dass** sie eine Greif- und Bewegungsvorrichtung, etwa einen Mehrachsenroboter (45), umfasst, welcher das Kunststoffbauteil (10; 40) greift, hält und relativ zu der ortsfesten Heißgasdüse (42) mit im Wesentlichen ortsfester Strahlachse bewegt, wobei die Greif- und Bewegungsvorrichtung dazu ausgebildet ist, das Kunststoffbauteil (10; 40) aus einer zu seiner Herstellung verwendeten Form (4) zu entnehmen und relativ zu der Heißgasdüse (42) zu bewegen.

10. Vorrichtung nach Anspruch 9,
**dadurch gekennzeichnet, dass** die Strahlachse zumindest in einem Abschnitt der Relativbewegung zwischen Heißgasstrahl und Kunststoffbauteil (10; 40) mit einer jeweils lokal von der Basisspur (B12, B14, B16) und der Abstehrichtung (A, A1, A2) aufgespannten Ebene einen Winkel mit einem Betrag von 60° bis 90°, vorzugsweise von 75° bis 90°, besonders bevorzugt im Wesentlichen einen rechten Winkel von etwa 90° einschließt.

11. Vorrichtung nach einem der Ansprüche 9 bis 10,
**dadurch gekennzeichnet, dass** sie eine Heißgasstrahl-Steuer/Regeleinrichtung aufweist, durch welche die Temperatur oder/und die Strömungsgeschwindigkeit während der Relativbewegung zwischen Heißgasdüse (42) und Kunststoffbauteil (10; 40) veränderlich ist.

12. Vorrichtung nach einem der Ansprüche 9 bis 11,
**dadurch gekennzeichnet, dass** sie eine Prüfeinrichtung (48) umfasst, welche die Güte des Kunststoffbauteils (10; 40) nach Entfernung eines eventuell vorhandenen Kunststoffmaterialüberschusses (12, 14, 16) prüft.

13. Vorrichtung nach Anspruch 12,
**dadurch gekennzeichnet, dass** die Prüfeinrichtung (48) dazu ausgebildet ist, zu prüfen, ob an einem Kunststoffbauteil (10; 40) Kunststoffmaterialüberschuss (12, 14, 16) vorhanden ist oder nicht.

14. Vorrichtung nach einem der Ansprüche 12 oder 13,
**dadurch gekennzeichnet, dass** die Prüfeinrichtung (48) eine Waage um fasst.

15. Vorrichtung nach einem der Ansprüche 12 bis 14,
**dadurch gekennzeichnet, dass** die Prüfeinrichtung (48) eine Vergleichseinrichtung umfasst, welche einen von der Prüfeinrichtung erfassten Ist-Parameter, insbesondere Ist-Gewicht, mit einem vorbestimmten Soll-Parameter, insbesondere Soll-Gewicht, oder vorbestimmten Soll-Parameterbereich vergleicht.

## Claims

1. A method for removing, in particular separating, excess plastics material (12,14,16) from a plastics component (10;40), in particular from a hollow plastics component (10;40), consisting of thermoplastic plastics material, wherein the excess plastics material (12,14,16) extends along a basic path (B12,B14,B16) on an outer surface of the plastics component (10;40) and protrudes in a projection direction (A,A1,A2) from the outer surface of the plastics component (10;40), which forms an angle with a bevel plane (SE1,SE2) including the basic path (B12,B14,B16) on the outer surface of the plastics component (10), wherein a hot gas jet flowing along a jet axis and which jet axis forms an angle with a plane extended in each case locally from the basic path (B12,B14,B16) and the projection direction in such a way as to be moved relative to the plastics component (10) substantially following the basic path (B12,B14,B16) so that the excess plastics material (12,14,16) is removed from the plastics component (10;40) ,
**characterised in that** the plastics component (10;40) is gripped by a gripping and moving device; for instance a multi-axial robot (45), and is moved relative to a stationary hot gas nozzle (42) from which the hot gas jet emerges with a substantially stationary jet axis, wherein the plastics component (10;40) is made available for removal by the gripping and moving device from a mould (4), in particular a blow mould.

2. A method according to Claim 1,
**characterised in that** the thermal energy of the hot gas jet is adjusted so that it is sufficient to soften the plastics material in a zone near the basic path (at 22,24,26).

3. A method according to Claim 2,
**characterised in that** the kinetic energy of the hot gas jet is adjusted so that it is sufficient to entrain and remove, at the impingement location of the hot gas jet on the plastics material, plastics material softened at this location.

4. A method according to any one of the preceding Claims,
**characterised in that** the orientation of the jet axis is varied at least during one portion of the relative movement between the hot gas jet and the plastics component (10;40).

5. A method according to any one of the preceding Claims,
**characterised in that**, in at least one portion of the relative movement between the hot gas jet and the plastics component (10;40), the jet axis forms an angle with a plane extended in each case locally from the basic path and the projection direction, which angle amounts to from 60° to 90°, preferably from 75° to 90°, especially preferably essentially a right angle of approximately 90°.

6. A method according to any one of the preceding Claims,
**characterised in that**, in a testing step, the quality of the plastics component (10) is tested after removal of any excess plastics material (12,14,16) which may be present.

7. A method according to Claim 6,
**characterised in that** the testing step comprises weighing the plastics component (10;40).

8. A method of producing a hollow plastics component, comprising the following method steps:
- extruding a preferably tubular hollow body blank (3),
- inserting the extruded hollow body blank (3) into a blow mould (4),
- introducing compressed air into the hollow body blank (3) inserted in the blow mould (4) so as to expand it until it abuts against a boundary wall of the blow mould cavity,
- allowing the plastics component (10;40) abutting against the boundary wall to cool and
- demoulding the cooled plastics component (10;40) from the blow mould (4),
**characterised in that** any excess plastics material (12,14,16), in particular flash, which extends along a basic path (B12,B14,B16) on an outer surface of the plastics component (10) and protrudes in a projection direction (A,A1,A2) from the outer surface of the plastics component (10;40), which forms an angle with a bevel plane (SE1,SE2) including the basic path (B12,B14,B16) on the outer surface of the plastics component (10), is removed, in particular separated, from the plastics component (10;40) by a method according to any one of the preceding Claims.

9. An apparatus for removing, in particular separating, excess plastics material (12,14,16) from a plastics component (10;40) consisting of thermoplastic plastics material, in particular from a hollow plastics component (10;40), wherein the excess plastics material (12,14,16) extends along a basic path (B12,B14,B16) on an outer surface of the plastics component (10;40) and protrudes in a projection direction (A,A1,A2) from the outer surface of the plastics component (10;40), which forms an angle with a bevel plane (SE1,SE2) including the basic path (B12,B14,B16) on the outer surface of the plastics component (10;40),
wherein the apparatus comprises a hot gas nozzle (42) which can move relative to the plastics component (10;40) at a distance from the basic path (B12,B14,B16), substantially following the latter, in such a way that a jet axis, along which hot gas flows out of the hot gas nozzle (42), forms an angle with a plane extended in each case locally from the basic path (B12,B14,B16) and the projection direction (A,A1,A2), wherein the excess plastics material (12,14,16) is removed from the plastics component (10;40) using the hot gas jet,
**characterised in that** it comprises a gripping and moving device, for instance a multi-axial robot (45), which grips and holds the plastics component (10;40) and moves it relative to the stationary hot gas nozzle (42) with a substantially stationary jet axis,
wherein the gripping and moving device is designed to remove the plastics component (10;40) from a mould (4) used for its production and to move it relative to the hot gas nozzle (42).

10. An apparatus according to Claim 9,
**characterised in that**, at least in one portion of the relative movement between the hot gas jet and the plastics component (10;40), the jet axis forms an angle with a plane extended in each case locally from the basic path (B12,B14,B16) and the projection direction (A,A1,A2), which angle amounts to from 60° to 90°, preferably from 75° to 90°, especially preferably essentially a right angle of approximately 90°.

11. An apparatus according to any one of Claims 9 to 10,
**characterised in that** it has hot gas jet control/regulating device, by means of which the temperature and/or the flow rate can be varied during the relative movement between the hot gas nozzle (42) and the plastics component (10;40).

12. An apparatus according to any one of Claims 9 to 11,
**characterised in that** it comprises a testing device (48) which tests the quality of the plastics component (10;40) after removal of any excess plastics material (12,14,16) which may be present.

13. An apparatus according to Claim 12,
**characterised in that** the testing device (48) is designed to test whether or not any excess plastics material (12,14,16) is present on a plastics component (10;40).

14. An apparatus according to either Claim 12 or Claim 13,
**characterised in that** the testing device (48) comprises scales.

15. An apparatus according to any one of Claims 12 to 14,
**characterised in that** the testing device (48) comprises a comparator which compares an actual parameter determined by the testing device, in particular actual weight, with a predetermined desired parameter, in particular desired weight, or a predetermined desired parameter range.

## Revendications

1. Procédé pour enlever, en particulier séparer, un excédent de matière plastique (12, 14, 16) depuis un composant en matière plastique (10 ; 40), en particulier depuis un composant creux en matière plastique (10 ; 40) en matériau thermoplastique, dans lequel l'excédent de matière plastique (12, 14, 16) s'étend le long d'un tracé de base (B12, B 14, B16) sur une surface extérieure du composant en matière plastique (10) et dépasse de la surface extérieure du composant en matière plastique (10 ; 40) dans une direction de dépassement (A, A1, A2), laquelle forme un angle avec un plan osculateur (SE1, SE2) qui contient le tracé de base de la surface extérieure du composant en matière plastique (10), et un jet de gaz chaud s'écoulant le long d'un axe de jet qui forme un angle avec un plan défini localement par le tracé de base (B12, B 14, B16) et par la direction perpendiculaire est déplacé en suivant sensiblement le tracé de base (B12, B 14, B16) par rapport au composant en matière plastique (10) de telle manière que l'excédent de matière plastique (12, 14, 16) est enlevé du composant en matière plastique (10 ; 40),
**caractérisé en ce que** le composant en matière plastique (10 ; 40) est saisi par un dispositif de saisie et de déplacement, comme par exemple un automate à plusieurs axes (45) et déplacé par rapport à une tuyère stationnaire à gaz chaud (42) de laquelle sort le jet de gaz chaud avec un axe de jet sensiblement stationnaire, et le composant en matière plastique (10 ; 40) est mis à disposition pour son enlèvement par le dispositif de saisie et de déplacement hors d'un moule (4), en particulier un moule de soufflage.

2. Procédé selon la revendication 1,
**caractérisé en ce que** l'énergie thermique du jet de gaz chaud est réglée de telle façon qu'elle suffit pour ramollir la matière plastique dans une zone (vers 22, 24, 26) proche du tracé de base.

3. Procédé selon la revendication 2,
**caractérisé en ce que** l'énergie cinétique du jet de gaz chaud est réglée de telle manière qu'elle suffit pour entraîner et pour enlever la matière plastique ramollie au niveau de l'emplacement d'incidence du jet de gaz chaud sur la matière plastique.

4. Procédé selon l'une des revendications précédentes,
**caractérisé en ce que** l'orientation de l'axe du jet est modifiée au moins pendant une portion du mouvement relatif entre le jet de gaz chaud et le composant en matière plastique (10 ; 40).

5. Procédé selon l'une des revendications précédentes,
**caractérisé en ce que** l'axe du jet forme, au moins dans une portion du mouvement relatif entre le jet de gaz chaud et le composant en matière plastique (10 ; 40), un angle avec un plan défini localement par le tracé de base et par la direction perpendiculaire d'une valeur entre 60° et 90°, de préférence entre 75° et 90°, et de manière particulièrement préférée sensiblement un angle droit d'environ 90°.

6. Procédé selon l'une des revendications précédentes,
**caractérisé en ce que** l'on contrôle, dans une étape de contrôle, la qualité du composant en matière plastique (10) après enlèvement d'un excédent éventuellement présent de matière plastique (12, 14, 16).

7. Procédé selon la revendication 6,
**caractérisé en ce que** l'étape de contrôle comporte un pesage du composant en matière plastique (10 ; 40).

8. Procédé pour réaliser un composant en matière plastique creux, comprenant les étapes de procédé suivantes :
- extrusion d'une ébauche de corps creux (3), de préférence de forme tubulaire,
- introduction de l'ébauche de corps creux extrudé (3) dans un moule de soufflage (4),
- injection d'air comprimé dans l'ébauche de corps creux (3) introduite dans le moule de soufflage (4), pour élargir celui-ci jusqu'à venir en contact contre une paroi de délimitation de la cavité du moule de soufflage,
- refroidissement du composant en matière plastique (10 ; 40) en contact contre la paroi de délimitation, et
- démoulage du composant en matière plastique (10 ; 40) refroidi hors du moule de soufflage (4),
**caractérisé en ce qu'**un excédent de matière plastique éventuel (12, 14, 16), en particulier une bavure de soufflage qui s'étend le long d'un tracé de base (B 12, B14, B16) sur une surface extérieure du composant en matière plastique (10) et dépasse depuis la surface extérieure du composant en matière plastique (10 ; 40) dans une direction de dépassement (A, A1, A2) qui forme un angle avec le plan osculateur (SE1, SE2) contenant le tracé de base (B12, B14, B16) sur la surface extérieure du composant en matière plastique (10), est enlevé, en particulier séparé du composant en matière plastique (10 ; 40) par un procédé selon l'une des revendications précédentes.

9. Dispositif pour enlever, en particulier séparer, un excédent de matière plastique (12, 14, 16) depuis un composant en matière plastique (10 ; 40) en matériau thermoplastique, en particulier depuis un composant creux en matière plastique (10 ; 40), tel que l'excédent de matière plastique (12, 14, 16) s'étend le long d'un tracé de base (B12, B 14, B16) sur une surface extérieure du composant en matière plastique (10 ; 40) et dépasse de la surface extérieure du composant en matière plastique (10 ; 40) dans une direction de dépassement (A, A1, A2) formant un angle avec le plan osculateur (SE1, SE2) qui contient le tracé de base (B12, B14, B16) sur la surface extérieure du composant en matière plastique (10 ; 40),
dans lequel le dispositif comprend une tuyère à gaz chaud (42) qui est déplaçable par rapport au composant en matière plastique (10 ; 40) à distance du tracé de base (B12, B14, B16) en suivant sensiblement celui-ci, de telle manière qu'un axe de jet, le long duquel du gaz chaud s'écoule en sortant de la tuyère à gaz chaud (42), forme un angle avec un plan défini localement par le tracé de base (B12, B 14, B 16) et par la direction de dépassement (A, A1, A2), et l'excédent de matière plastique (12, 14, 16) est enlevé du composant en matière plastique (10 ; 40) en utilisant le jet de gaz chaud,
**caractérisé en ce qu'**il comprend un dispositif de saisie et de déplacement, comme par exemple un automate à plusieurs axes (45), qui saisit le composant en matière plastique (10 ; 40), le maintient et le déplace par rapport à la tuyère à gaz chaud stationnaire (42) avec un axe de jet sensiblement stationnaire, et le dispositif de saisie et de déplacement est réalisé pour enlever le composant en matière plastique (10 ; 40) hors d'un moule (4) utilisé pour sa fabrication et le déplacer par rapport à la tuyère à gaz chaud (42).

10. Dispositif selon la revendication 9,
**caractérisé en ce que** l'axe du jet forme, au moins dans une portion du mouvement relatif entre le jet de gaz chaud et le composant en matière plastique (10 ; 40), un angle avec un plan défini localement par le tracé de base (B12, B14, B16) et par la direction de dépassement (A, A1, A2), d'une valeur entre 60° et 90°, de préférence entre 75° et 90°, et de manière particulièrement préférée sensiblement un angle droit d'environ 90°.

11. Dispositif selon l'une des revendications 9 et 10,
**caractérisé en ce qu'**il comprend un système de commande/régulation pour le jet de gaz chaud, au moyen duquel la température et/ou la vitesse d'écoulement peuvent être modifiées pendant le mouvement relatif entre la tuyère à gaz chaud (42) et le composant en matière plastique (10 ; 40).

12. Dispositif selon l'une des revendications 9 à 11,
**caractérisé en ce qu'**il comprend un système de contrôle (48) qui contrôle la qualité du composant en matière plastique (10 ; 40) après enlèvement d'un excédent de matière plastique (12, 14, 16) éventuellement présent.

13. Dispositif selon la revendication 12,
**caractérisé en ce que** le système de contrôle (48) est réalisé afin de contrôler si un excédent de matière plastique (12, 14, 16) est présent ou non sur un composant en matière plastique (10 ; 40).

14. Dispositif selon l'une des revendications 12 ou 13,
**caractérisé en ce que** le système de contrôle (48) comprend une balance.

15. Dispositif selon l'une des revendications 12 à 14,
**caractérisé en ce que** le système de contrôle (48) comprend des moyens de comparaison qui comparent un paramètre réel détecté par le système de contrôle, en particulier un poids réel, avec un paramètre de consigne prédéterminé, en particulier un poids de consigne, ou avec une plage prédéterminée de paramètre de consigne.
